# EUROPÄISCHE PATENTSCHRIFT

(11) **EP 2 522 433 B1**
(45) Veröffentlichungstag und Bekanntmachung des Hinweises auf die Patenterteilung: **03.10.2018**
(21) Anmeldenummer: 12401077.8
(22) Anmeldetag: 04.05.2012
(51) Int. Cl.: A01M 7/00, B05B 1/04, B05B 1/16, B05B 1/20, B05B 15/00, F21V 33/00, F21W 121/02, F21Y 115/10

(54) **Mehrfachdüsenkörper mit Beleuchtung**
Multiple-nozzle body with lighting
Corps à buses multiples avec éclairage

(30) Priorität: 10.05.2011 DE 102011050234
(43) Veröffentlichungstag der Anmeldung: 14.11.2012
(73) Patentinhaber: Amazonen-Werke H. Dreyer GmbH & Co. KG, 49205 Hasbergen (DE)
(72) Erfinder: Langkamp, Laurenz, 49545 Tecklenburg (DE)

(56) Entgegenhaltungen:
- EP-A2- 1 961 300
- EP-B1- 1 661 627
- DE-U1-202009 004 872

## Beschreibung

Erfindung betrifft einen Mehrfachdüsenkörper gemäß des Oberbegriffes des Patentanspruches 1.

Ein derartiger Mehrfachdüsenkörper ist beispielsweise durch die DE 20 2009 004 872 U1 bekannt. Über Verstellelemente lassen sich dabei verschiedene Ausbringdüsen des Mehrfachdüsenkörpers aktivieren oder deaktivieren. Derartige Mehrfachdüsenkörper werden unter anderem an Feldspritzen verwendet. Dem Mehrfachdüsenkörper sind jeweils den von der jeweiligen Ausbringdüse ausgestoßenen Flüssigkeitsfächer beleuchtende Lichtquellen zugeordnet. Diese Lichtquellen sind an den unteren Enden von nach unten ragenden Haltestäben, welche an der Unterseite der Mehrfachdüsenkörpergehäuse befestigt sind, im Bereich der Flüssigkeitsfächer angeordnet. Diese Anordnung ist relativ aufwändig. Außerdem befinden die Lichtquellen in einem ungeschützten Bereich.

Ein weiterer Mehrfachdüsenkörper ist beispielsweise durch die EP 1 661 627 B1 bekannt. Über Verstellelemente lassen sich dabei verschiedene Ausbringdüsen des Mehrfachdüsenkörpers aktivieren oder deaktivieren. Derartige Mehrfachdüsenkörper werden unter anderem an Feldspritzen verwendet.

Feldspritzen werden in der Landwirtschaft zum Ausbringen von Pflanzenschutzmitteln eingesetzt. Sie weisen ein sich quer zur Fahrtrichtung erstreckendes Verteilergestänge auf. Derartige Verteilergestänge erreichen derzeit Arbeitsbreiten bis zu 42m. An diesen Verteilergestängen sind beabstandet zueinander Verteilerdüsen angeordnet. Um wirtschaftlich arbeiten zu können, müssen mit der Feldspritze die Ausbringarbeiten auch bei Dunkelheit durchgeführt werden. Nur so ist genügend Ausbringzeit vorhanden. Dies ist darauf zurückzuführen, dass während des Tages, insbesondere bei Sonnenschein über die Mittagsstunden keine Pflanzenschutzmittel sinnvoll ausgebracht werden können, weil es dann zu Beschädigungen an den Blättern und den Pflanzen selber kommt. Die Flüssigkeitstropfen wirken dann wie optische Linsen, so dass es zu Verbrennungen an den Pflanzen kommt.

Für Feldspritzen mit Verteilerdüsen, die als Einzeldüsen ausgebildet sind, wurde dieses Problem gemäß EP 1 961 300 A3 bereits dadurch gelöst, dass zumindest einigen der Verteilerdüsen eine den von den Verteilerdüsen ausgestoßenen Flüssigkeitsfächer beleuchtende Lichtquelle zugeordnet ist. Der Erfindung liegt die Aufgabe zugrunde, eine vorteilhafte Anordnung von Lichtquellen zur Beleuchtung von Sprühfächern, die von Ausbringdüsen von Mehrfachdüsenkörpern erzeugt werden, vorzuschlagen.

Diese Aufgabe wird erfindungsgemäß durch das Kennzeichen des Patentanspruches 1 gelöst. Durch die Anordnung von Lichtquellen, wegen ihres vorteilhaft geringen Energieverbrauchs bevorzugt LEDs, wird der von den Düsen des Mehrfachdüsenkörpers ausgestoßene Flüssigkeitsfächer auch bei Dunkelheit sichtbar. Durch die zentrale Anordnung der Lichtquellen an den Mehrfachdüsenkörpern lässt sich mit einer sehr geringen Anzahl von Lichtquellen eine gute Sichtbarmachung des Sprühfächers erreichen. Die Aufnahmevorrichtung der Lichtquellen befindet sich dabei zumindest annähernd in der Mitte des Gehäuses der motorischen Verstellelemente des Mehrfachdüsenkörpers. Diese Ausgestaltung der Aufnahmevorrichtung ist besonders vorteilhaft, da so die Voraussetzung geschaffen ist, in sehr einfacher Weise die Energieversorgung der Lichtquellen über die Energieversorgung der motorischen Verstellelemente umsetzbar zu machen. Dadurch müssen keine zusätzlichen Versorgungsleitungen gelegt werden.

Durch erfindungsgemäße Anordnung der Lichtquellen sind die ausgestoßenen Flüssigkeitsfächer auch bei Dunkelheit in einfacher und sicherer Weise für den Fahrer der Feldspritze sichtbar zu machen, wobei die zumindest annähernd mittige Anordnung der Lichtquellen für eine gleichmäßigere Ausleuchtung der von den einzelnen Düsen des Mehrfachdüsenkörpers ausgestoßenen Flüssigkeitsfächer sorgt als eine beliebige andere Anordnung es tun könnte. Weiterhin können darüber hinaus in besonders einfacher Weise Lichtquellen an einzelnen Mehrfachdüsenkörpern eingesetzt und/oder ausgetauscht werden.

Eine vorteilhafte Ausgestaltung der Energieversorgung lässt sich dadurch erreichen, dass in der Aufnahmevorrichtung Verbindungselemente angeordnet sind. Besonders vorteilhaft ist die Ausgestaltung der Verbindungselemente als passende Steckkontakte, so dass die Lichtquellen in einfacher Form in das Gehäuse der Verstellelemente des Mehrfachdüsenkörpers einsetzbar oder, beispielsweise zur Wartung oder zum Ersetzen, herausnehmbar sind.

In einer vorteilhaften Ausgestaltung der Erfindung ist ein Verschlusselement vorgesehen, das bei Nichtverwendung der Lichtquellen in der Aufnahmevorrichtung, in die Aufnahmevorrichtung einsetzbar ist. Die Lichtquellen sind dabei in einfacher Weise durch Verschlusselemente ersetzbar, wobei die Verschlusselemente in analoger Weise in das Gehäuse der Verstellelemente einsetzbar und wieder herausnehmbar sind. Ein Vorteil dieser Ausgestaltung ist die Verhinderung des Eindringens von Schmutz oder anderen Störkörpern in die Aufnahmevorrichtung bei Nichtverwendung der Lichtquellen in der Aufnahmevorrichtung. Vorteilhaft ist diese Ausgestaltung auch, da dieselben Mehrfachdüsenkörper ohne weitere Modifikation in Ausführungen mit und in Ausführungen ohne Lichtquellen für den Verkauf angeboten werden können. So kann später in einfacher und kostengünstiger Weise eine Nachrüstung vorgenommen werden.

In einer besonders vorteilhaften Ausführung der Erfindung sind jeder Düse des Mehrfachdüsenkörpers eine oder mehrere Lichtquellen zugeordnet. So kann eine besonders gute Ausleuchtung des von der jeweiligen Düse ausgestoßenen Flüssigkeitsfächers sichergestellt werden. Hier bei können die einzelnen Lichtquellen individuell auf einen Spritzfächer entsprechend optimiert ausgerichtet sein.

Weiterhin ist eine derartige Ausführung vorteilhaft, da auf diese Weise über geeignete Sensoranordnungen separat das von jedem einzelnen Sprühfächer reflektierte Licht in einfacherer Weise detektiert und dadurch die Sensoren beispielsweise als automatische funktionskontrollierende Elemente verwendbar sind.

Die einzelnen Düsen eines Mehrfachdüsenkörpers sind zu verschiedenen Zeiten in Betrieb nehmbar. Daher werden in einer vorteilhaften Ausführung der Erfindung die den einzelnen Düsen zugeordneten Lichtquellen mindestens annähernd zeitgleich zu den betreffenden Düsen in Betrieb genommen. Auf diese Weise werden sowohl Gebrauchserscheinungen als auch der Energiebedarf der Lichtquellen reduziert.

Weitere Einzelheiten der Erfindung sind der Beispielsbeschreibung und den Zeichnungen zu entnehmen. Hierbei zeigen
- Fig. 1: den Mehrfachdüsenkörper in perspektivischer Ansicht mit angedeutetem Spritzfächer aus einer Düse,
- Fig. 2: den Mehrfachdüsenkörper in perspektivischer Ansicht,

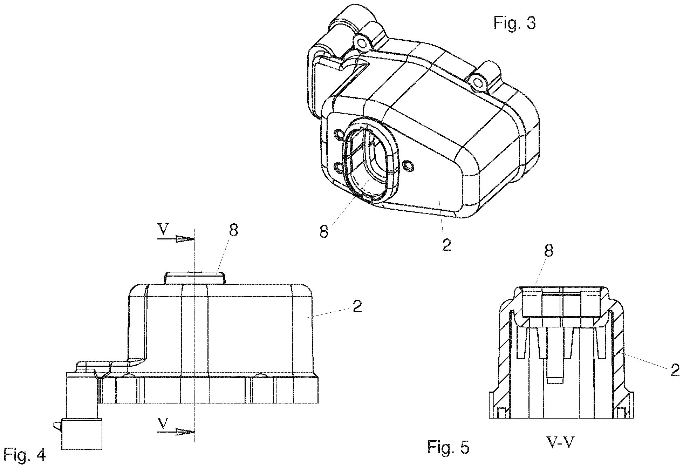

- Fig. 3: das Gehäuse der motorischen Verstellelemente in perspektivischer Ansicht,
- Fig. 4: das Gehäuse der motorischen Verstellelemente in seitlicher Ansicht,
- Fig. 5: das Gehäuse der motorischen Verstellelemente in der Ansicht V - V gemäß Fig. 4,

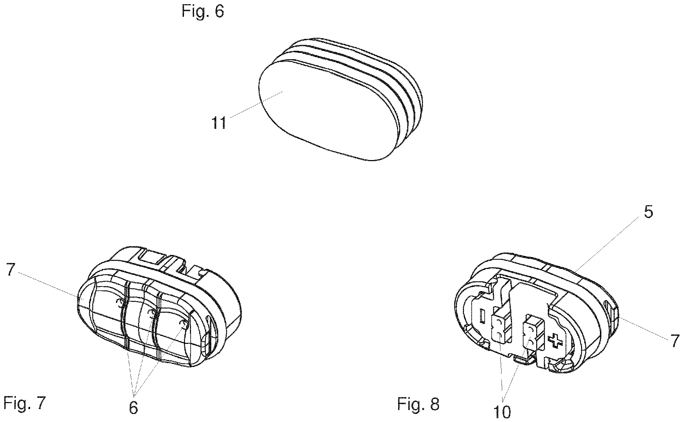

- Fig. 6: das Verschlusselement in vergrößerter Darstellung,
- Fig. 7: die als LEDs ausgebildeten Lichtquellen in Vorderansicht und in vergrößerter Darstellung,
- Fig. 8: die als LEDs ausgebildeten Lichtquellen in Rückansicht und in vergrößerter Darstellung,

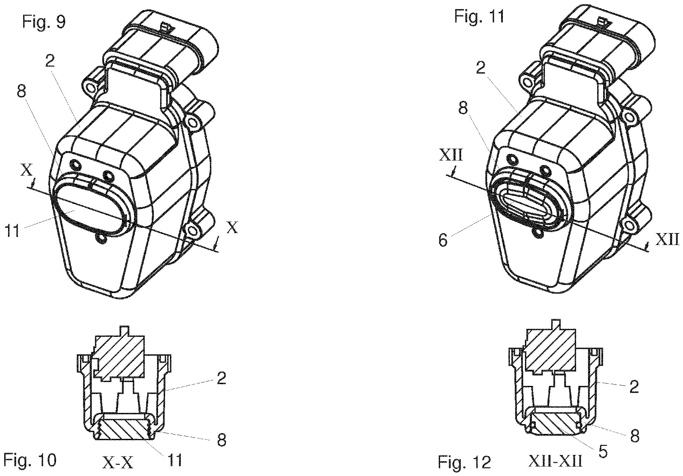

- Fig. 9: das Gehäuse der motorischen Verstellelemente in perspektivischer Ansicht mit Verschlusselement,
- Fig. 10: das Gehäuse der motorischen Verstellelemente in Ansicht X - X aus Fig. 9,
- Fig. 11: das Gehäuse der motorischen Verstellelemente in perspektivischer Ansicht mit als LEDs ausgebildeten Lichtquellen und
- Fig. 12: das Gehäuse der motorischen Verstelllemente in Ansicht XII - XII aus Fig. 11.

Der Mehrfachdüsenkörper weist das Mehrfachdüsenkörpergehäuse 1 auf. Im unteren Bereich des Gehäuses befindet sich das Gehäuse 2 der motorischen Verstellelemente des Mehrfachdüsenkörpers. Im oberen Bereich des Mehrfachdüsenkörpergehäuses 1 ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

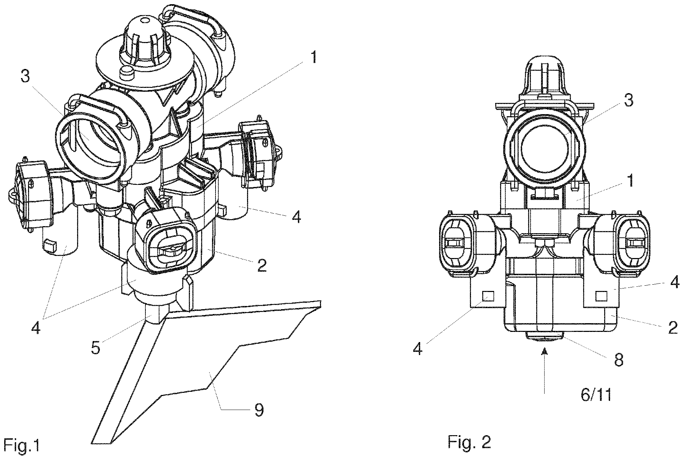

Die Flüssigkeitsleitung 3 ist mit der in dem Mehrfachdüsenkörpergehäuse 1 angeordneten, nicht dargestellten Zuleitung verbunden. Die Zuleitung mündet in einem in dem Mehrfachdüsenkörpergehäuse 1 angeordneten, nicht dargestellten Verteilerraum aus. Von diesem Verteilerraum führen, gemäß des Ausführungsbeispieles, vier nicht dargestellte Verbindungsleitungen zu den vier Anschlussstücken 4 der Ausbringdüsen 5, von denen eines in Fig. 1 nicht zu sehen ist und von denen zwei in Fig. 2 nicht zu sehen sind, die mittig in zumindest annähernd gleichmäßiger Weise um das Mehrfachdüsenkörpergehäuse 1 herum angeordnet sind.

Die Verbindungsleitungen sind im Bereich des Verteilerraumes mittels nicht dargestellter Absperrelemente abzusperren. Über diese Absperrelemente sind die Verbindungsleitungen mit der Zuleitung wahlweise verbindbar und/oder ihr gegenüber absperrbar. Die Absperrelemente sind über ein schaltbares, nicht dargestellte motorische Verstellelement, welches als Elektromotor ausgebildet ist, der sich im Gehäuse 2 der motorischen Verstellelemente befindet, betätigbar und somit in die jeweilige Absperr- oder Durchflussposition zu bringen.

Das als Elektromotor ausgebildete, motorische Verstellelement, welches in dem Gehäuse 2 angeordnet ist, ist über nicht dargestellte Verbindungsleitungen mit einer Stromversorgung und einer Steuerungseinrichtung, welche beispielsweise als Bordcomputer ausgebildet sein kann, verbunden.

Die als LEDs ausgebildeten Lichtquellen 6 sind zumindest annähernd mittig an der Unterseite des Gehäuses 2 der motorischen Verstellelemente in einem Lichtgehäuse 7 in der als Aussparung in dem Gehäuse 2 ausgebildeten Aufnahmevorrichtung 8 angeordnet. Von dort aus bilden sie Lichtkegel aus, die jeweils den Sprühfächer 9 der zugeordneten Düse 5 des Mehrfachdüsenkörpers beleuchten, derart, dass die zugeordneten Lichtquellen 6 in Betrieb genommen werden, wenn über die jeweilige Düse Mittel ausgebracht werden. Das heißt, eine zugeordnete Lichtquelle 6 wird dann zum Leuchten gebracht, wenn die betreffende Düse über die Verbindungsleitung mit der Zuleitung verbunden ist und über somit über die Düse Mittel ausgebracht werden.

An der Rückseite des Lichtgehäuses 7 der drei als LEDs ausgebildeten Lichtquellen 6 befinden sich als elektrische Steckkontakte 10 ausgebildete Verbindungselemente, mit denen die Energieversorgung der Lichtquellen 6 über die Energieversorgung der motorischen Verstellelemente erfolgt.

Anstatt der in einem Lichtgehäuse 7 befindlichen als LEDs ausgebildeten Lichtquellen 6, kann ein Verschlusselement 11 in die als Aussparung in dem Gehäuse 2 ausgebildeten Aufnahmevorrichtung 8 angeordnet werden. Dadurch lässt sich das Eindringen von insbesondere Schmutz und anderen Fremdkörpern in die Aufnahmevorrichtung 8 verhindern.

## Patentansprüche

1. Mehrfachdüsenkörper mit mehreren Ausbringdüsen (5) zur Anordnung an der Flüssigkeitsleitung (3) einer landwirtschaftlichen Feldspritze mit einem Mehrfachdüsenkörpergehäuse (1), an dem die Ausbringdüsen (5) angeordnet und in welchem Verstellelemente zum Aktivieren und Deaktivieren der Ausbringdüsen (5) angeordnet sind, wobei zumindest einigen der Ausbringdüsen (5) eine den von der Ausbringdüse (5) ausgestoßenen Flüssigkeitsfächer (9) beleuchtende Lichtquelle (6) zugeordnet ist, wobei die Lichtquellen (6) zumindest annähernd mittig zwischen den Ausbringdüsen (5) angeordnet sind, **dadurch gekennzeichnet, dass** das Mehrfachdüsenkörpergehäuse (1) in seinem unteren Bereich ein Gehäuse (2) für motorische Verstellelemente des Mehrfachdüsenkörpers aufweist, dass in dem Gehäuse (2) der Verstellelemente zumindest annährend mittig an dessen Unterseite eine als Aussparung ausgebildete Aufnahmevorrichtung (8) für ein Lichtgehäuse (7) der Lichtquellen (6) angeordnet ist.

2. Mehrfachdüsenkörper nach Anspruch 1, **dadurch gekennzeichnet, dass** elektrische Verbindungselemente zur Energieversorgung der Lichtquellen (6) vorgesehen sind.

3. Mehrfachdüsenkörper nach Anspruch 2, **dadurch gekennzeichnet, dass** die Energieversorgung der Lichtquellen (6) mit der Versorgungsleitung der Verstellelemente verbindbar ist.

4. Mehrfachdüsenkörper nach Anspruch 2, **dadurch gekennzeichnet, dass** die Lichtquellen (6) herausnehmbar und durch ein Verschlusselement (11) austauschbar sind.

5. Mehrfachdüsenkörper nach Anspruch 1, **dadurch gekennzeichnet, dass** jeder Düse (5) des Mehrfachdüsenkörpers eine oder mehrere Lichtquellen (6) zugeordnet sind.

6. Mehrfachdüsenkörper nach Anspruch 5, **dadurch gekennzeichnet, dass** die zugeordneten Lichtquellen (6) in Betrieb nehmbar sind, wenn über die Düse (5) Mittel ausgebracht werden.

7. Mehrfachdüsenkörper nach zumindest einem der vorstehenden Ansprüche, wobei die Ausbringdüsen (5) in zumindest annähernd regelmäßiger Weise um das Gehäuse (1) verteilt angeordnet sind, **dadurch gekennzeichnet, dass** die Lichtquelle (6) in zumindest annähernd gleichen Abständen zu den Ausbringdüsen (5) angeordnet ist.

## Claims

1. Multiple-nozzle body with multiple dispensing nozzles (5) for arrangement on the liquid line (3) of an agricultural field sprayer, having a multiple-nozzle body housing (1) on which the dispensing nozzles (5) are arranged and in which adjustment elements for the activation and deactivation of the dispensing nozzles (5) are arranged, wherein at least some of the dispensing nozzles (5) are assigned a light source (6) which illuminates the liquid fans (9) discharged by the dispensing nozzle (5), wherein the light sources (6) are arranged at least approximately centrally between the dispensing nozzles (5), **characterized in that** the multiple-nozzle body housing (1) has, in its lower region, a housing (2) for motor-type adjustment elements of the multiple-nozzle body, **in that**, in the housing (2) of the adjustment elements, at least approximately centrally on the underside thereof, there is arranged a receiving device (8), formed as a recess, for a light housing (7) of the light sources (6).

2. Multiple-nozzle body according to Claim 1, **characterized in that** electrical connecting elements are provided for the energy supply to the light sources (6).

3. Multiple-nozzle body according to Claim 2, **characterized in that** the energy supply to the light sources (6) is connectable to the supply line of the adjustment elements.

4. Multiple-nozzle body according to Claim 2, **characterized in that** the light sources (6) are removable and exchangeable for a closure element (11).

5. Multiple-nozzle body according to Claim 1, **characterized in that** each nozzle (5) of the multiple-nozzle body is assigned one or more light sources (6).

6. Multiple-nozzle body according to Claim 5, **characterized in that** the assigned light sources (6) can be set in operation when media are dispersed by the nozzle (5).

7. Multiple-nozzle body according to at least one of the preceding claims, wherein the dispensing nozzles (5) are arranged so as to be distributed in an at least approximately regular manner around the housing (1), **characterized in that** the light source (6) is arranged so as to be spaced apart at least approximately uniformly from the dispensing nozzles (5).

## Revendications

1. Corps à buses multiples, pourvu de plusieurs buses de distribution (5), destiné à être placé sur un conduit à liquide (3) d'un pulvérisateur agricole, avec un carter de corps à buses multiples (1), sur lequel sont placées les buses de distribution (5) et dans lequel sont placés des éléments de réglage pour l'activation et la désactivation des buses de distribution (5), à au moins certaines des buses de distribution (5) étant affectée une source lumineuse (6) qui éclaire les compartiments à liquide (9) expulsé par la buse de distribution (5), les sources lumineuses (6) étant placées au moins approximativement au centre des buses de distribution (5), **caractérisé en ce que** dans sa région inférieure, le carter de corps à buses multiples (1) comporte un carter (2) pour des éléments de réglage moteurs du corps à buses multiples, **en ce que** dans le carter (2) des éléments de réglage est placé au moins approximativement au centre sur la face inférieure de celui-ci un dispositif de logement (8) conçu sous la forme d'un évidement pour un boîtier d'éclairage (7) des sources lumineuses (6).

2. Corps à buses multiples selon la revendication 1, **caractérisé en ce que** des éléments de branchement électrique sont prévus pour l'alimentation en énergie des sources lumineuses (6).

3. Corps à buses multiples selon la revendication 2, **caractérisé en ce que** l'alimentation en énergie des sources lumineuses (6) peut être branché sur le conduit d'alimentation des éléments de réglage.

4. Corps à buses multiples selon la revendication 2, **caractérisé en ce que** les sources lumineuses (6) sont amovibles et interchangeables grâce à un élément de fermeture (11).

5. Corps à buses multiples selon la revendication 1, **caractérisé en ce qu'**à chaque buse (5) du corps à buses multiples sont affectées une ou plusieurs sources lumineuses (6).

6. Corps à buses multiples selon la revendication 5, **caractérisé en ce que** les sources lumineuses (6) affectées peuvent être mises en service lorsque des produits sont distribués par l'intermédiaire de la buse (5).

7. Corps à buses multiples selon au moins l'une quelconque des revendications précédentes, les buses de distribution (5) étant placées en distribution de manière au moins approximativement régulière autour du carter (1), **caractérisé en ce que** la source lumineuse (6) est placée avec des écarts au moins approximativement identiques par rapport aux buses de distribution (5).
